# EUROPEAN PATENT APPLICATION

(11) **EP 1 132 909 A1**
(43) Date of publication of application: **12.09.2001**
(21) Application number: 01200899.1
(22) Date of filing: 09.03.2001
(51) Int. Cl.: G11B 19/02, G11B 27/00

(54) **Equipment for playing sound recordings**

(30) Priority: 10.03.2000 NL 1014611
(71) Applicant: Media Tools, 1217 RM Hilversum (NL)
(72) Inventor: van Schenkhof, Aart Cornelis, 1217 RM Hilversum (NL); Pantelic, Vladimir, 61381 Friedrichsdorf (DE); Kurpiers, Alexander Felix, 63285 Darmstadt (DE); Nagtegaal, Willem Paul, 2402 PL Alphen a/d Rhijn (NL)
(74) Representative: Jorritsma, Ruurd

(57) **Abstract**

Equipment for playing sound recordings, each of which is stored in a specific location on a storage medium and can be searched for and played by means of a known address, which equipment is provided with a control unit that controls the storage medium, searches for the sound recordings by means of the address and feeds the signals from the carrier, if necessary after conversion and amplification, to an output, wherein the control unit is programmed by a programme applying to a specific time period for searching for and playing the sound recordings a predetermined sequence, such that a predetermined sound recording is played, at least approximately, on a predetermined day and at a predetermined time on that day.

## Description

The invention relates to equipment for playing sound recordings, each of which is stored in a specific location on a storage medium and can be searched for and played by means of the known address of the relevant location, which equipment is provided with a control unit that controls the storage medium, searches for the sound recordings by means of the address and feeds the signals from the carrier, if necessary after conversion and amplification, to an output.

Various embodiments of such equipment are known. For example, CD players exist that can be programmed by the user such that specific recordings amongst the sound recordings present on a CD can be played in a sequence determined by the user, that is to say independently of the sequence in which the recordings were recorded on the CD. With this equipment it is thus the user who carries out that programming, with the result that the sound recordings played will represent the taste of the user.

There are also CD players which have a "shuffle" or "random" facility where the control unit is programmed in such a way that the recordings on a CD are played in an arbitrary sequence, it being possible to ensure that all recordings are played at least once before a recording that has already been played is repeated. It is true that in this case the user has no direct influence on the sequence in which the sound recordings are played, but it is the user who has selected the CD and placed it in the equipment. Incidentally, this is also the case with the equipment referred to in the preceding paragraph.

More options are offered by the so-called multi-CD players in which a number of CDs can be placed, where, in the shuffle setting, the control unit determines in an arbitrary sequence which CD will be selected and which recording on this CD will be played. By this means, music can be played for a longer period without recordings that have already been played being repeated. However, here again the user has an influence on the choice of the sound recordings played because, after all, the user loads the CDs into the player and thus initially determines the music recordings from which the player can make its automatic selection.

None of the abovementioned types of equipment is, in fact, optimally suitable for producing "background music". What, in fact, are the requirements with which background music must comply:
- Each track in a programme of background music belongs to a certain category. Therefore, in a good programme of background music in general sound recordings will be found which belong to one specific category or possibly a closely related category.
- Not every track is suitable for playing at any time of day or on every day of the year. Christmas carols and the like are clearly linked to a certain period of the year. Furthermore, the one sound recording is preferably played in the morning, whilst other sound recordings are to the average listener's taste in the afternoon or evening.
- It is also important that there are no sudden changes in volume in a programme of background music, except when these changes are determined by the relevant sound recording itself. In other words, the transition from the one sound recording to the next must be achieved gradually, without annoying pauses. In fact, the average listener should not notice or should hardly notice that the one sound recording has finished and that another sound recording is now being played.
- Background music is application-dependent. The background music in a noisy pub will clearly differ from the background music in a village hall during the whist drive.
There is therefore a need for equipment with which background music can be produced, that is to say equipment with which at least a number of the abovementioned conditions are met. In accordance with this need, the invention now provides equipment for playing sound recordings, each of which is stored in a specific location on a storage medium and can be searched for and played by means of a known address, which equipment is provided with a control unit that controls the storage medium, searches for the sound recordings by means of the address and feeds the signals from the carrier, if necessary after conversion and amplification, to an output, characterised in that the control unit is programmed by a programme applying to a specific time period for searching for and playing the sound recordings in a predetermined sequence, such that a predetermined sound recording is played, at least approximately, on a predetermined day and at a predetermined time on that day.

The programme by means of which the control unit in the equipment is programmed can, for example, be supplied by a selection committee made up of one or more experts who are aware of the average taste of the general public, who know what background music is and who therefore are able, if necessary, to compile a programme for several days that will be appreciated by the average listener.

There are various technical options for complying with the abovementioned condition that a specific sound recording is played on a specific day and at a specific time. A preferred embodiment of the equipment is now characterised in that the equipment is provided with a clock (date and time) and in that, after switching on the equipment, the control unit searches, on the basis of a signal from the clock, in the programmed sequence for that track that, at least approximately, should be played at that time of the day and then begins to play it.

The storage medium can be any desired and suitable storage medium, such as an optical CD or DVD, a magnetic hard disk or possibly a number of hard disks, and the like. Because it is desirable to be able to use the equipment at least for a number of days and possibly for a number of weeks in succession, the storage capacity of the storage medium will have to be high. However, nowadays there is no problem whatsoever in storing music for several months on a storage medium. However, pre-programming such equipment becomes increasingly difficult the longer the period for which it is programmed because, in general, in background music as well account must be taken of the popularity of certain recordings, trends in music and the like. It is therefore also preferable that the equipment is designed in such a way that another programme can be loaded as desired. By, for example, changing the programme once a week it is possible to take account of current trends. Sound recordings that are very popular at that particular time can, for example, be played several times a day, recordings which are probably less appreciated by the listeners can be removed from the file, and the like. All of this is carried out by external programmers. The selection made by these programmers, however, falls outside the specification of requirements in this description.

For background music, it is particularly important that the music has a "continuous" character, that is to say that the music as it were continues uninterrupted, even on changing from one sound recording to the next. It is therefore also extremely important that in a preferred embodiment of the equipment the equipment is provided with a so-called cross-fade circuit, by means of which, on changing from the one sound recording to the next, the volume of the one sound recording is reduced from operational level to zero and the volume of the next sound recording is increased from zero to sound level, such that there are no significant changes in volume in the total average volume.

In some cases it could be desirable temporarily or permanently to switch to another background music programme, for example of another category which, although it differs from the category previously played, does not differ too much from the latter. Consideration can be given to a café where the background music programme is usually of the "light, jolly music" category. Should the mood change for any reason there can be a need to switch to "party music, singalong music and the like". In this context preferred equipment according to the invention is characterised in that the control unit is provided with means for storing more than one programme and is also provided with the switching means by means of which it is possible to switch from one programme to another programme in such a way that a change is made in the sequence defined by the other programme, to that sound recording that corresponds to the particular time of day. The switching means can consist of a simple push button by means of which the user activates the change of programme.

In general, it will not be desirable to allow the background music to play on the second programme. It is therefore preferable that the control unit is provided with switching means with a timer which, from the point in time when the switch is made from the one to the other programme, runs for a predetermined period and at the end of that period activates switching means in order to switch to the first programme or to a third programme.

The invention will be explained in more detail below with reference to the appended figures.

Figure 1 shows a first, very simple embodiment of equipment according to the invention.

Figure 2 shows a further developed embodiment of equipment according to the invention.

Figure 3 shows a yet further developed embodiment of equipment according to the invention.

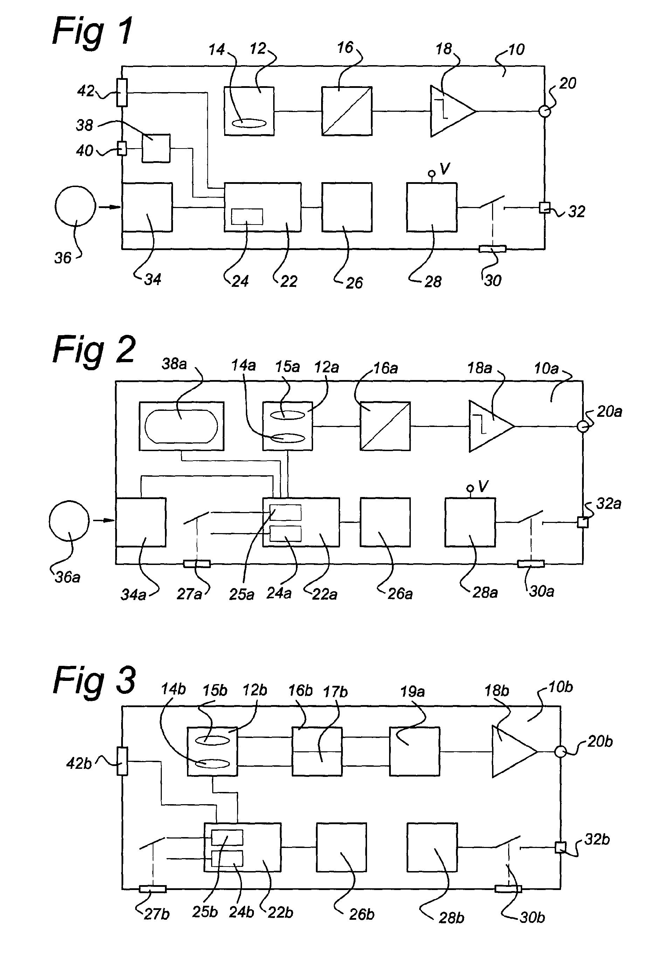

The equipment according to the invention is indicated in its entirety by 10 in Figure 1. The equipment comprises a storage medium 14, in this case symbolically represented as a hard disk, which is in a suitable housing 12, in which the heads and the like for reading/writing to the hard disk are also housed. The equipment further contains a digital-analogue converter 16, which converts the digital signals from the hard disk 14 into analogue signals and feeds these to the input of an amplifier 18. This amplifier 18 ensures that the signals that are produced at the output 20 are at an adequate level in order, depending on the embodiment, to be fed directly to one or more loudspeakers or to be fed to a further external audio installation. The amplifier 18 is optionally provided with an integral filter in order to eliminate interference as a consequence of the D-A process.

In accordance with the invention, the equipment 10 is further provided with a control unit 22 that controls the hard disk unit 12 on the basis of a programme 24 loaded in the control unit. This programme determines on what day and at what time of that day a predetermined sound recording will be read from the disk 14 and further processed by the units 16 and 18. In order to be able to determine both the day and the time of day, a clock 26 is also present which provides information on time and date.

The various components of the equipment 10 are powered from a power unit 28 which supplies the various components with the requisite supply voltages V, .... The power unit can be switched on and off via a switch which has control means 30 accessible from the outside.

The components of the equipment according to Figure 1 that have been described up to now function as follows. After switching on the equipment by means of the push button 30, as a result of which all components in the equipment are supplied with the necessary supply voltage, the processor 22 will automatically reset and then receive information from the clock 26 in respect of the current date and the time of day. On the basis of this information, a search will be made in the programme 24 for that sound recording that corresponds to this date and at least approximately corresponds to the time of day and the programme 24 will then be used, starting with this sound recording, to address sound recordings on the carrier 14 and to play them via the D-A converter 16 and the amplifier 18. The equipment thus produces a continuous series of sound signals until the equipment is switched off by means of the button 30.

Despite the fact that the capacity of hard disks is still growing, it will nevertheless be necessary at some point in time to replace all or some of the tracks stored on these disks by other tracks. In this case, of course, the programme 24 will also have to be replaced by another programme that is matched to the new contents of the hard disk 14. There are a number of options for making such a change of hard disk contents and software possible without the actual user of the equipment having to bother with this. In the equipment 10 according to Figure 1 a CD-ROM drive 34 has been integrated, in which CD-ROMs, such as 36, can be loaded. Should the contents of the disk 14 and/or the software 24 be changed, this can then be effected via one or more CD-ROMs 36. Loading software into a computer from a CD-ROM is currently standard procedure and it will be clear that music signals or possibly other audio signals can be stored on the hard disk 14 from a CD 36 in the same way. The changing of the software and the contents of the hard disk 14 is preferably carried out by maintenance personnel who come along at set times for that purpose. The actual user of the equipment is not inconvenienced at all by this.

Another possibility for changing software and disk contents is to make use of a modem such as 38 linked to telephone connector 40. The connector 40 can either be permanently connected to the telephone network or can be connected to the network specifically for the occasion. When a connection has been made, the new software can then be loaded into the processor 22 from an external station and, moreover, the contents of the hard disk 14 can also be amended or changed via this processor on the basis of the signals that are received from the external station via the modem 38.

Another possibility is the use of a direct computer or database connection, for example via a connector 42. This option also is known per se and requires no further explanation.

In Figure 1, several facilities have been integrated in one piece of equipment; however, it will be clear that one of these facilities is sufficient to enable the software and the contents of the hard disk to be changed.

A further developed embodiment of equipment according to the invention is illustrated in Figure 2. The components that are identical to those in Figure 1 are indicated by the same reference numerals, followed by an a. In this embodiment the equipment is provided with a unit 12a in which several hard disks are located, in this case disks 14a and 15a. The capacity of the storage medium is thus actually doubled. If necessary, so-called "arrays" of greater numbers of hard disks can be used. The signals from the unit 12a are again processed by the D-A converter 16a and the amplifier 18a and the amplified signals are produced via the output 20a. The processor 22a is in this case provided with two separate programmes 24a and 25a. With the aid of a switch 27a and associated control unit, the user is able to select one of the two programmes 24a or 25a. The equipment is furthermore again provided with the clock 26 and the power unit 28 with control mechanism 30. The two programmes 24a or 25a can again be loaded in the processor 22a via one of the means discussed in Figure 1. Only the CD-ROM 34a has been drawn in Figure 2 and the software can thus be loaded with the aid of one or more CD-ROMs 36a.

Finally, Figure 2 also contains a component that is lacking in Figure 1, specifically a screen 38a on which a number of things can be displayed which could be important to a user, such as:
- data from the clock, such as date and time of day;
- the title of the track currently being played (at least if these data are available in the software);
- the title of the next track;
- the time needed to play to the end of this track;
- any error messages.

The mode of operation of the equipment according to Figure 2 essentially corresponds to the mode of operation of the equipment according to Figure 1. The sole difference lies in the fact that the user is now able to select one of two possible programmes, where, in general, one of the two programmes will be designated the main programme. In other words, as soon as the equipment is switched on by operating the button 30a, the control unit 22a will, for example, select programme 24a as main programme and on the basis of this proceed in the manner described above. The user is, however, able to decide, by pressing the button 27a, that it is necessary to switch to the second programme 25a at least temporarily. This switch-over preferably takes place in such a way that at the end of the sound recording that is still determined by programme 24a a change is made to that sound recording in programme 25a that corresponds to the current date and at least approximately corresponds to the time of day.

The switch 27a can optionally be constructed in such a way that it remains continuously in the switched position after it has been operated, so that programme 25a is played continuously after switching over. The switch 27a can also be so constructed that it switches back to the original position when operated a second time. In that case, the user is able him- or herself to determine when the alternative programme has to be ended. Preferably, however, measures will be taken to ensure that the period after switch-over to the other programme 25a is relatively restricted, for example 10 minutes, a quarter of an hour, or the like. Various options known per se are available for this. At the end of the period, the programme then automatically changes back to programme 24a.

A yet further developed embodiment is illustrated in Figure 3. In this case also, components that correspond to the components in Figures 1 and 2 are indicated by the same reference numerals, followed by a b. As in Figure 2, the equipment 10b in Figure 3 is provided with a hard disk unit 12b with two hard disks 14b and 15b in order thus to achieve a greater storage capacity. The disk unit 12b is in this case followed by two D-A converters 16b and 17b, each of which is used to convert the digital signals from one of the disks into an analogue signal. The two analogue signals at the outputs of the D-A converters are fed to a so-called cross-fade circuit 19a. This cross-fade circuit 19a ensures that the total average volume of the signal at the output 20b shows no or only very little variation on transition from one sound recording to the next sound recording. What this will entail in practice is that the end of the one sound recording will be gradually attenuated in the cross-fade circuit 19a whilst at the same time the start of the next sound recording will be played with gradually increasing volume. In this way the end of the one sound recording as it were gradually merges into the start of the next recording without this leading to variations in the average volume at the output 20b. Various variants of such cross-fade circuits are known per se and a more detailed explanation of these circuits is therefore considered superfluous.

The cross-fade circuit 19a is, in turn, followed by the amplifier 18b, optionally with the filter present therein, which amplifier feeds its signals to the output 20b. The control unit 22 is provided, in the same way as in Figure 2, with two programmes 24b and 25b that can be selected by a user via the switching mechanism 27b. The clock 26b and the power unit 28b with switching mechanism 30b to the mains power supply 32b are also present in this case.

In this embodiment, it has been elected to use a bus interface 42b as the means for loading or changing the programmes and loading or changing the contents of the hard disks 14b and 15b. It will be clear that the other input options can optionally also be present. Furthermore, a display can be added in this embodiment as well in order to provide the user with some information.

The use of two separate D-A converters 16b and 17b, each coupled to one of the hard disks 14b and 15b, respectively, has advantages for the implementation of the cross-fade circuit 19a. If it is assumed that the two disks 14b and 15b are able to provide signals independently of one another, the software in the processor 22b can then ensure that the signals arrive at the cross-fade circuit 19a at the correct points in time, so that no memory function has to be present in said cross-fade circuit 19a. However, it is also possible to design a cross-fade circuit that mixes the signals originating from a single hard disk with one another. In this case use must be made of memories or delay lines in which at least some signals can be temporarily stored, such that two signals can be supplied simultaneously to the actual cross-fade circuit.

Incidentally, digital cross-fade circuits with which digital signals can be processed are also possible. In this case, the sequence of the circuits 16 and 19 would have to be reversed. Moreover, in this case only one D-A converter is required.

In all three illustrative embodiments a hard disk unit with one or more hard disks has been used as storage medium. It will be clear that other storage media can also be used, such as CDs, DVDs and other optical media, but optionally also magnetic tapes, integral semiconductor memories and the like. The programmes 24 and 25 in the above examples can be loaded into the control unit 22 in a wide variety of different ways. It is possible provide the equipment with a CD reader, in which a CD on which the programme is stored can be inserted. On the other hand, it is possible to provide the equipment with, for example, a telephone connection, such that the programme data can be downloaded to the equipment 10 from a central location via the telephone line. The range of possibilities also includes the use of plug-in cards, plug-in memory modules and the like.

It will be necessary not only to load a new programme 24, 25 from time to time, but it will also be necessary to refresh the sound recordings on the storage medium from time to time in order to ensure that in any event those sound recordings that have been programmed into one of the programmes 24, 25 are present on the storage medium.

## Claims

1. Equipment for playing sound recordings, each of which is stored in a specific location on a storage medium and can be searched for and played by means of a known address, which equipment is provided with a control unit that controls the storage medium, searches for the sound recordings by means of the address and feeds the signals from the carrier, if necessary after conversion and amplification, to an output, **characterised in that** the control unit is programmed by a programme applying to a specific time period for searching for and playing the sound recordings in a predetermined sequence, such that a predetermined sound recording is played, at least approximately, on a predetermined day and at a predetermined time on that day.

2. Equipment according to Claim 1, **characterised in that** the equipment is provided with a clock and in that, after switching on the equipment, the control unit searches, on the basis of a signal from the clock, in the programmed sequence for that track that, at least approximately, should be played at that time of the day and then begins to play it.

3. Equipment according to Claim 1 or 2, **characterised in that** the equipment is designed in such a way that another programme can be loaded as desired.

4. Equipment according to Claim 1, 2 or 3, **characterised in that** the equipment is designed in such a way that at least some of the sound recordings can be deleted and can be replaced by other sound recordings, as desired.

5. Equipment according to one of the preceding claims, **characterised in that** the equipment is provided with a so-called cross-fade circuit, by means of which, on changing from the one sound recording to the next, the volume of the one sound recording is reduced from operational level to zero and the volume of the next sound recording is increased from zero to sound level, such that there are no significant changes in volume in the total average volume.

6. Equipment according to one of the preceding claims, **characterised in that** the control unit is provided with means for storing more than one programme and is also provided with switching means by means of which it is possible to switch from one programme to another programme in such a way that a change is made in the sequence defined by the other programme to that sound recording that corresponds to the particular time of day.

7. Equipment according to Claim 6, **characterised in that** the control unit is provided with switching means with a timer which, from the point in time when the switch is made from the one to the other programme, runs for a predetermined period and at the end of that period activates switching means in order to switch to the first programme or to a third programme.

8. Equipment according to one of Claims 6 or 7 referring back to Claim 5, **characterised in that** the cross-fade circuit continues to operate even when switching between programmes.

9. Equipment according to one of the preceding claims, **characterised in that** the equipment is provided with or can be linked to a display on which information relating to the programme currently in use and/or relating to the sound recording currently being played is displayed.

10. Equipment according to one of the preceding Claims 1 - 4, **characterised in that** the equipment has only one control means that can be operated by a user, specifically an on/off button.

11. Equipment according to one of the preceding Claims 5 or 6, **characterised in that** the equipment is provided only with programme switching means, in addition to an on/off button.
